# FASCICULE DE BREVET EUROPEEN

(11) **EP 3 709 522 B1**
(45) Date de publication et mention de la délivrance du brevet: **23.04.2025**
(21) Numéro de dépôt: 20162251.1
(22) Date de dépôt: 10.03.2020
(51) Int. Cl.: H04B 1/40, G06F 1/26, G06F 1/16, H03K 17/00

(54) **CIRCUIT DE COMMUNICATION DE DONNÉES**
DATENKOMMUNIKATIONSCHALTKREIS
DATA COMMUNICATION CIRCUIT

(30) Priorité: 14.03.2019 FR 1902607
(43) Date de publication de la demande: 16.09.2020
(73) Titulaire: STMicroelectronics France, 92120 Montrouge (FR)
(72) Inventeur: BUSSON, Pierre, 38000 GRENOBLE (FR)
(74) Mandataire: Cabinet Beaumont

(56) Documents cités:
- WO-A1-2009/123077
- WO-A1-2016/066371
- WO-A1-2018/234242
- US-A- 4 985 783
- US-A1- 2015 286 605
- US-A1- 2019 064 879

## Description

### Domaine technique

La présente description concerne de façon générale les dispositifs électroniques, notamment la communication de données entre dispositifs électroniques.

### Technique antérieure

Dans de nombreuses applications, des dispositifs électroniques, tels que des ordinateurs, des téléphones mobiles, des disques durs, des stations de travail, des écrans vidéo, etc., échangent des données. Pour cela, ces dispositifs sont chacun équipé d'un circuit de communication de données, qui reçoit des données à transmettre, et fournit ces données à un élément de communication tel qu'un câble ou une antenne.

WO 2018/234242 concerne un câble et un connecteur mâle pouvant être relié au câble pour la transmission d'énergie et de données, dans le cadre d'applications de fourniture d'énergie.

WO°2009/123077 concerne un dispositif de communication et un procédé de commande du dispositif. Résumé de l'invention

L'invention est exposée dans le jeu de revendications joint.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de manière très schématique, un mode de réalisation d'un circuit de communication de données ;
la figure 2 représente, de manière très schématique, un autre mode de réalisation d'un circuit de communication de données ;
la figure 3 représente, de manière très schématique, un mode de réalisation d'un dispositif comprenant un circuit de communication de données et un circuit d'émission/réception sans fil ;
la figure 4 représente, de manière très schématique, un mode de réalisation d'un appareil mobile en place sur un support pour appareil mobile ;
la figure 5 représente, de manière très schématique, des circuits de communication de données et d'alimentation électrique, compris dans le support et l'appareil mobile de la figure 4 ;
la figure 6 représente, de manière schématique et partielle, un mode de réalisation d'un dispositif de communication sans fil et d'alimentation, relié à un appareil mobile ;
la figure 7 représente, de manière très schématique, des circuits de communication de données et d'alimentation électrique, compris dans le dispositif de communication et d'alimentation et dans l'appareil mobile de la figure 6 ;
la figure 8 représente, de manière schématique, un mode de réalisation d'un circuit de communication de données ;
la figure 9 représente, de manière schématique, un autre mode de réalisation d'un circuit de communication de données ;
la figure 10 représente schématiquement, mais de manière plus détaillée, le circuit de communication de la figure 8 relié à une unité de traitement de données ; et
la figure 11 représente, schématiquement mais de manière plus détaillée, le circuit de communication de la figure 9.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, on n'a pas décrit en détail des unités de traitement de données telles qu'un microprocesseur et des circuits d'émission/réception de données sans fil, les modes de réalisation décrits étant compatibles avec les unités usuelles de traitement de données et les circuits usuels d'émission/réception de données sans fil.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence, sauf précision contraire, à l'orientation des figures ou à un support d'appareil mobile dans une position normale d'utilisation.

Sauf précision contraire, les expressions "environ", "approximativement", "sensiblement", et "de l'ordre de" signifient à 10 % près, de préférence à 5 % près.

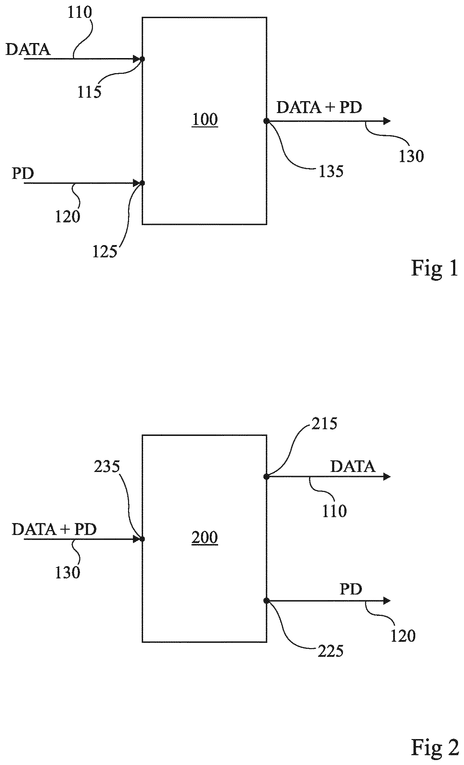

La figure 1 représente, de manière très schématique, un mode de réalisation d'un circuit 100 de communication de données. Le circuit 100 comprend deux entrées, 115 et 125, et une sortie 135.

En fonctionnement, le circuit 100 reçoit des données 110 (DATA). Dans l'exemple représenté, les données 110 sont en série et parviennent au circuit 100 par l'entrée 115. L'entrée 115 comprend par exemple deux bornes, et les données correspondent à des différences successives de tension entre ces deux bornes. De préférence, les données 110 comprennent, ou sont constituées par, des données de type USB 3.0 (ou USB 3.1 Gen 1) ou supérieur, c'est-à-dire des données ayant un débit supérieur ou égal à 5 Gbits/s. Les données de type USB peuvent être de type USB 3.1 (ou USB 3.1 Gen 2) ou supérieur, c'est-à-dire des données ayant un débit supérieur ou égal à 10 Gbits/s. En variante, les données 110 peuvent comprendre, ou être constituées par, des données vidéo, c'est-à-dire des données contenant des informations permettant de reconstituer une succession d'images optionnellement accompagnées de son.

Le circuit 100 reçoit en outre, en parallèle des données 110, des données 120 de configuration d'alimentation électrique (PD, "Power Deli very"), c'est-à-dire des données contenant des informations de tension et/ou d'intensité et/ou de puissance électrique et/ou d'état de charge et/ou de profil de charge. Les données 120 de configuration d'alimentation électrique parviennent de préférence en série au circuit 100 par une entrée 125 du circuit 100. Par exemple, l'entrée 125 comprend deux bornes et les données 120 correspondent à des variations de tension entre ces deux bornes.

Le circuit 100 met en série les données 120 de configuration d'alimentation électrique et les données 110. Le circuit 100 fournit alors les données 120 et 110 en série. Plus précisément, le circuit 100 fournit, sur une sortie 135, des données 130 (DATA+PD) comprenant les données 120 de configuration d'alimentation électrique en série avec les données 110. Par exemple, les données 130 sont constituées des données 110 et 120 en série et de marqueurs permettant de distinguer, parmi les données 130, lesquelles sont les données 110 et lesquelles sont les données 120. Les données 130 ont de préférence un débit moyen égal ou supérieur à la somme des débits des données 110 et 120.

Les données 130 peuvent être transmises à un dispositif extérieur non représenté. Du fait que les données 110 et 120 sont fournies en série, elles peuvent être transmises par un unique lien de communication avec le dispositif extérieur, par exemple un canal de communication sans fil. Les données 110 et les données de configuration d'alimentation électrique 120 sont ainsi plus simples à transmettre que parallèlement par des liens de communication distincts.

La figure 2 représente, de manière très schématique, un mode de réalisation d'un circuit 200 de communication de données. Le circuit 200 comprend une entrée 235, et deux sorties, 215 et 225.

Le circuit 200 reçoit en série les données 130 (DATA+PD) décrites ci-dessus en relation avec la figure 1. Le circuit 200 extrait les données 110 (DATA) et 120 (PD) (figure 1) des données 130. Le circuit 200 fournit les données 110 et 120 en parallèle sur les deux sorties distinctes respectives 215 et 225. Chaque sortie 215 ou 225 comprend, par exemple, deux bornes entre lesquelles le circuit 200 applique une différence de potentiel correspondant aux données 110 ou 120. De préférence, les données 110 sont fournies en série sur la sortie 215. De préférence, les données 120 de configuration d'alimentation électrique sont fournies en série sur la sortie 225.

Les données 130 peuvent provenir d'un dispositif extérieur non représenté. Du fait que les données 110 et 120 sont en série, elles peuvent être reçues par un unique lien de communication, par exemple sans fil. Les données 110 et les données de configuration d'alimentation électrique 120 sont donc plus simples à recevoir qu'à partir de deux liens de communication distincts.

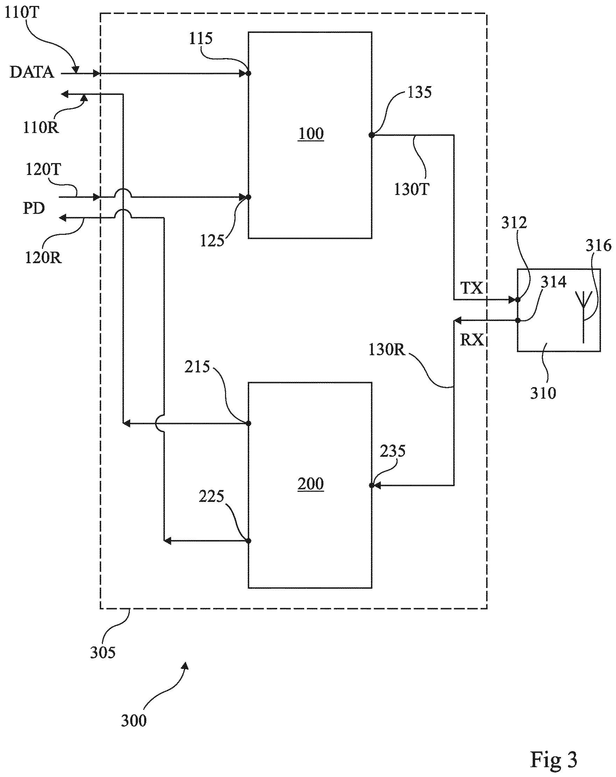

La figure 3 représente, de manière très schématique, un mode de réalisation d'un dispositif 300 comprenant un circuit 305 de communication de données et un circuit 310 d'émission/réception sans fil.

Le circuit 305 comprend un circuit 100 du type de celui de la figure 1, et un circuit 200 du type de celui de la figure 2. La sortie 135 du circuit 100 est reliée, de préférence connectée, à une entrée 312 (TX) du circuit d'émission/réception 310. L'entrée 235 du circuit 200 est reliée, de préférence connectée, à une sortie 314 (RX) du circuit d'émission/réception 310.

En fonctionnement, le circuit 100 reçoit des données de configuration d'alimentation électrique 120T (PD) à transmettre, et des données 110T (DATA) à transmettre, du type des données respectives 110 et 120 décrites en relation avec la figure 1. Le circuit 100 produit alors sur sa sortie 135 des données en série 130T comprenant les données 110T et 120T et en série, du type des données 130 de la figure 1. Les données 130T sont alors émises par le circuit 310. De préférence, les données 130T sont véhiculées par des ondes radiofréquence émises par une antenne 316 du circuit 310. La fréquence d'émission des ondes radiofréquence est de préférence supérieure à 60 GHz. Ceci permet de transmettre les données 130T lorsque les données 110T sont de type USB 3.0 ou supérieur.

Le circuit 310 reçoit des données en série 130R, par exemple en provenance d'un dispositif non représenté qui reçoit les données 130T. Les données 130R sont de préférence véhiculées par des ondes radiofréquence captées par l'antenne 316, ou par une antenne non représentée distincte de l'antenne 316. Les données 130R sont du type des données 130 décrites en relation avec la figure 1, c'est-à-dire qu'elles comprennent des données de configuration d'alimentation électrique en série avec d'autres données. Le circuit 200 reçoit les données 130R par son entrée 235. Le circuit 200 extrait, à partir des données 130R, les données de configuration d'alimentation électrique (données 120R). Le circuit 200 fournit, sur sa sortie 225, les données de configuration d'alimentation électrique 120R. Le circuit 200 extrait en outre, à partir des données 130R, des données 110R du type des données 110 décrites en relation avec la figure 1. Le circuit 200 fournit les données 110R sur sa sortie 215.

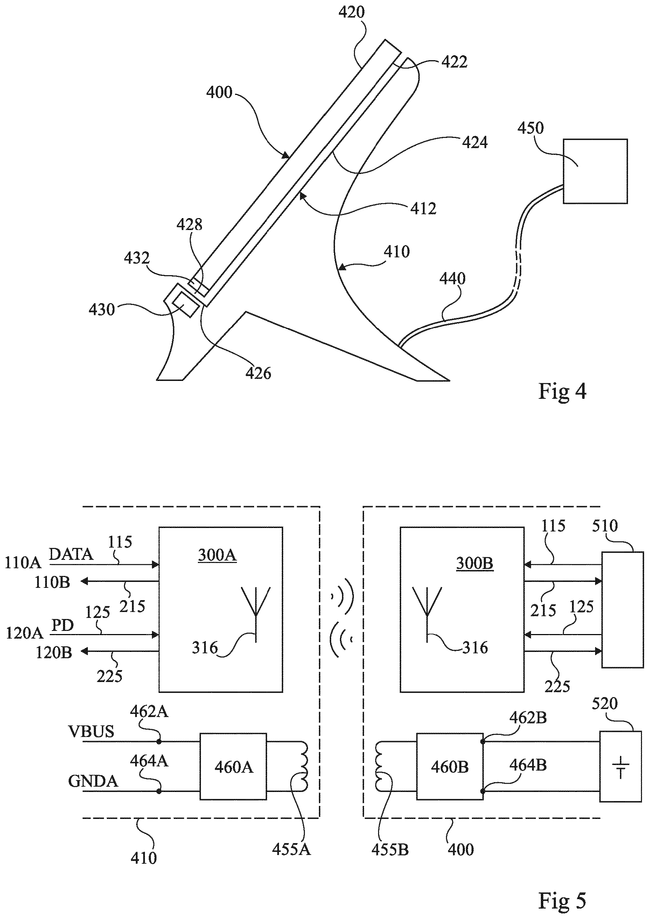

La figure 4 représente un mode de réalisation d'un appareil mobile 400 en place dans un mode de réalisation d'un support 410 pour appareil mobile.

L'appareil mobile 400 est par exemple un téléphone portable, ou une tablette. L'appareil mobile 400 peut être constitué par n'importe quel dispositif doté d'une unité de traitement de données, par exemple un microprocesseur (non représenté en figure 4). De préférence, l'appareil mobile 400 comprend en outre une réserve d'énergie électrique rechargeable telle qu'une batterie, par exemple une batterie au lithium (non représentée).

Le support 410 comprend un emplacement 412 destiné à recevoir l'appareil mobile. Dans l'exemple représenté, l'appareil mobile a la forme d'une plaque plane ayant deux faces principales opposées 420 et 422. L'emplacement 412 comprend par exemple une face plane 424 qui, une fois l'appareil 400 en place, est en contact avec la face 422. Dans le cas où l'appareil mobile 400 comprend un écran d'affichage, celui-ci est de préférence situé du côté de la face 420. Dans l'exemple représenté, dans une position normale d'utilisation, la face 424 est inclinée, et est limitée sur son bord inférieur par un épaulement 426. Un bord 428 de l'appareil mobile est alors positionné contre l'épaulement. En variante, la face 424 est horizontale dans une position normale d'utilisation. L'épaulement 426 peut alors être omis, et l'appareil mobile peut être posé dans n'importe quelle position sur la face 424.

De préférence, le support comprend un ou plusieurs aimants 430. De préférence, l'appareil mobile 400 comprend un élément ferromagnétique 432. Lorsque l'appareil mobile est en place dans le support 410, le ou les aimants 430 et l'élément ferromagnétique 432 créent une force qui maintient l'appareil mobile 400 en place sur le support 410.

De préférence, le support 410 est destiné à être relié par un câble 440 à un dispositif 450 comprenant une source d'alimentation électrique. Le dispositif 450 est constitué par exemple par un ordinateur, une station de travail, un moniteur d'affichage d'images, un projecteur d'images, etc. De préférence, le dispositif 450 comprend des circuits numériques tels que des circuits de traitement de données, par exemple un microprocesseur. En variante, le support 410 comprend une source d'alimentation électrique. Le support 410 peut également comporter une unité de traitement de données telle qu'un microprocesseur.

La figure 5 représente, de manière très schématique, des circuits de communication et d'alimentation électrique compris dans le support 410 et l'appareil mobile 400 de la figure 4. L'appareil mobile comprend typiquement d'autres circuits. Ces autres circuits ne sont ni représentés, ni détaillés, les modes de réalisation décrits étant compatibles avec les circuits usuels des appareils mobiles.

Le support 410 comprend un circuit de communication de données 300A, comprenant les mêmes éléments que le circuit 300 de la figure 3. Le circuit 300A comprend donc un circuit 100 (figure 1), un circuit 200 (figure 2), et un circuit 310 (figure 3) d'émission et/ou réception en série sans fil comprenant une antenne 316. Ainsi, le circuit 300A est configuré pour recevoir, sur son entrée 115, des données série de préférence de type USB 3.0 ou supérieur, et, sur son entrée 125, des données de configuration d'alimentation électrique. L'antenne 316 du circuit 300A émet en série les données reçues sur les entrées 115 et 125 du circuit 300A. Le circuit 300A est en outre configuré pour recevoir par son antenne 316 des données série, de préférence de type USB 3.0 ou supérieur, en série avec des données de configuration d'alimentation électrique. Le circuit 300A fournit les données série sur sa sortie 215 et les données de configuration d'alimentation électrique sur sa sortie 225.

Le support 410 comprend en outre une inductance 455A. L'inductance 455A a ses bornes reliées, de préférence connectées, à un circuit 460A. Le circuit 460A a des bornes 462A et 464A d'application d'une tension d'alimentation, par exemple une tension continue VBUS référencée par rapport à la masse GNDA du support 410. Les bornes 462A et 464A sont par exemple reliées, de préférence connectées, par exemple par le câble 440, à une source d'alimentation comprise dans le dispositif 450 (figure 4). En variante, les bornes 462A et 464A sont reliées à une source d'alimentation électrique interne au support 410.

De préférence, l'appareil mobile 400 comprend un circuit 300B, comprenant les mêmes éléments que le circuit 300 de la figure 3. Le circuit 300B comprend donc un circuit 100 (figure 1), un circuit 200 (figure 2), et un circuit 310 (figure 3) d'émission et/ou réception sans fil en série, comprenant une antenne 316. Ainsi, le circuit 300B est configuré pour recevoir, sur son entrée 115, des données, de préférence de type USB 3.0 ou supérieur, et, sur son entrée 125, des données de configuration d'alimentation électrique. L'antenne 316 émet en série les données reçues parallèlement sur les entrées 115 et 125 du circuit 300B. Le circuit 300B est en outre configuré pour recevoir par son antenne 316 des données série, de préférence de type USB 3.0 ou supérieur, en série avec des données de configuration d'alimentation électrique. Le circuit 300B fournit les données série sur sa sortie 215 et les données de configuration d'alimentation électrique sur sa sortie 225. Les sorties 215 et 225 du circuit 300B sont reliées, de préférence connectées, à des circuits de l'appareil mobile, par exemple à un microprocesseur 510.

L'appareil mobile 400 comprend en outre une inductance 455B. Lorsque l'appareil mobile 400 est en place sur le socle 410, les inductances 455A et 455B sont en couplage mutuel. L'inductance 455B a ses bornes reliées, de préférence connectées, à un circuit 460B. Le circuit 460B a des bornes 462B et 464B reliées, de préférence connectées, à d'autres éléments de l'appareil mobile, par exemple à un stockage d'énergie électrique 520 situé dans l'appareil mobile. Le stockage d'énergie 520 comprend par exemple une batterie.

En fonctionnement, des données 110A, de préférence des données de type USB 3.0 ou supérieur, et des données 120A de configuration d'alimentation électrique arrivent sur les entrées respectives 115 et 125 du circuit 300A. Les données 110A proviennent par exemple du dispositif 450 (figure 4). Les données 110A et 120A sont par exemple véhiculées par le câble 440.

Les données 110A et 120A sont mises en série et émises par le circuit 300A. Les données 110A et 120A en série parviennent sans fil au circuit 300B, et sont reçues par le circuit 300B. Le circuit 300B fournit alors les données 110A et 120A sur les sorties respectives 215 et 225. Les données 110A sont par exemple reçues par les circuits de l'appareil mobile 400, par exemple par le microprocesseur 510.

De même, des données 110B, de préférence des données de type USB 3.0 ou supérieur, et des données 120B de configuration d'alimentation électrique arrivent sur les entrées respectives 115 et 125 du circuit 300B. Les données 110B et 120B proviennent par exemple du microprocesseur 510.

Les données 110B et 120B sont mises en série et émises par le circuit 300B. Les données 110B et 120B parviennent sans fil au circuit 300A. Le circuit 300A fournit alors les données 110B et 120B en parallèle sur les sorties respectives 215 et 225 du circuit 300A. Les données 110B sont par exemple véhiculées par le câble 440. Les données parviennent par exemple jusqu'au dispositif 450.

Ainsi, lorsque l'appareil mobile 400 est en place sur le support 410, l'appareil mobile et le support peuvent échanger des données de type USB 3.0 ou supérieur et, simultanément, des données de configuration d'alimentation électrique. Les données 120A et 120B de configuration d'alimentation électrique échangées contiennent de préférence des informations concernant la tension d'alimentation et/ou l'état de charge et/ou la puissance d'alimentation et/ou le courant d'alimentation de l'appareil mobile 400. Les données 120A et 120B correspondent de préférence au standard connu sous le nom de "USB Power Delivery".

En application des données de configuration d'alimentation électrique échangées, le circuit 460A applique une tension alternative à l'inductance 455A. Cette tension alternative se transmet par couplage mutuel à l'inductance 455B. La tension alternative aux bornes de l'inductance 455B est utilisée comme source d'énergie par le circuit 460B pour produire sur les bornes 462B et 464B une tension V d'alimentation, par exemple référencée par rapport à la masse de l'appareil mobile.

Ainsi, lorsque l'appareil mobile 400 est en place sur le support 410, l'appareil mobile et le support peuvent échanger des données, et en même temps l'appareil mobile peut être rechargé. La puissance d'alimentation est de préférence comprise entre 1 W et 15 W.

Cet échange de données et cette recharge sont réalisés sans l'intermédiaire d'un connecteur mâle et d'un connecteur femelle branchés l'un à l'autre, tels que des connecteurs de type USB. On évite ainsi des problèmes qui apparaîtraient si les données et l'énergie électrique étaient véhiculées par l'intermédiaire de tels connecteurs, tels que des problèmes de fiabilité de la connexion. De tels problèmes apparaissent en particulier après plusieurs cycles de branchement et de débranchement. En outre, un appareil mobile comprenant un connecteur USB femelle a une épaisseur supérieure à celle du connecteur. En l'absence de ce connecteur, l'appareil mobile 400 peut donc avoir une épaisseur réduite.

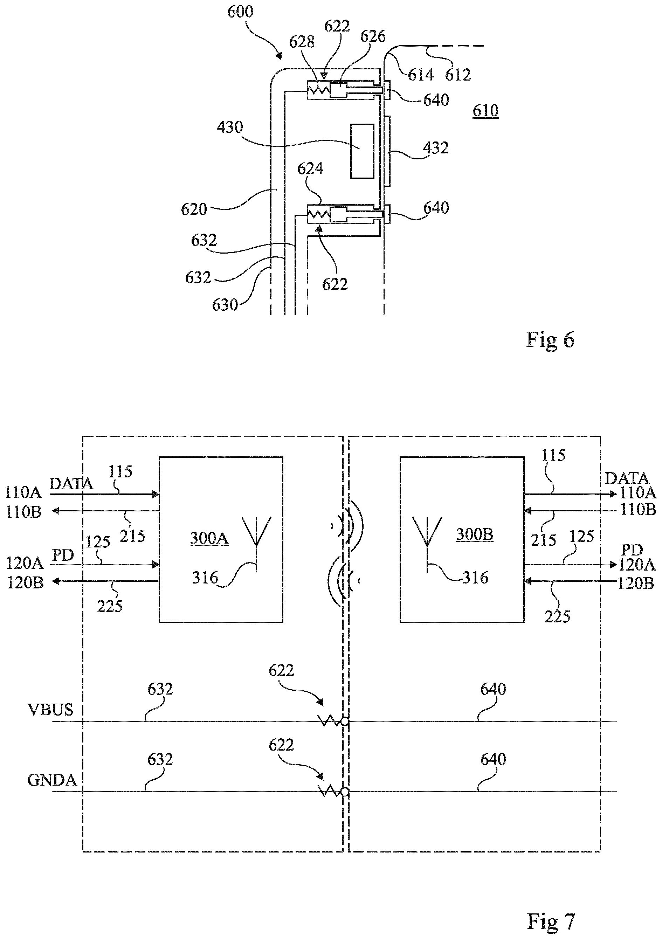

La figure 6 représente, de manière schématique et partielle, un mode de réalisation d'un dispositif 600 de communication sans fil et d'alimentation, relié à un appareil mobile 610. Seule une portion de l'appareil mobile 610 est représentée. L'appareil mobile 610 est du type de l'appareil mobile 400 de la figure 4, à la différence qu'il peut éventuellement être dépourvu de l'inductance 455B. A titre d'exemple, l'appareil mobile 610 est un téléphone mobile en forme de plaque plane, dont un bord 612 est représenté près d'un coin 614 de la plaque, par exemple un coin arrondi.

Le dispositif 600 comprend un corps 620 situé à une extrémité d'un câble 630. Le câble 630 a par exemple son autre extrémité reliée à un dispositif du type du dispositif 450 décrit en relation avec la figure 4.

Le corps comprend deux bornes de contact à ressort 622. Les bornes de contact à ressort sont de préférence du type connu sous la dénomination commerciale "PoGo". Chaque borne comprend alors un logement 624 débouchant du côté de l'appareil mobile, dans lequel se situe un élément conducteur de contact 626 et un ressort 628 en appui entre le fond du logement 624 et l'élément de contact 626. Chaque élément 626 est connecté à un fil 632 passant dans le câble 630. Lorsque le dispositif 600 est en place contre le bord de l'appareil mobile 610, les ressorts 628 créent une force qui maintient les éléments mobiles 626 en contact avec l'appareil mobile.

L'appareil mobile comprend deux zones de contact 640, électriquement conductrices. Les zones de contact sont positionnées en sorte d'être chacune en contact avec l'un des éléments 626 lorsque le dispositif 600 est en place contre l'appareil mobile 610. Les fils conducteurs 632 sont ainsi connectés électriquement aux zones de contact 640 de l'appareil mobile 610. Les zones de contact 640 sont reliées aux circuits de l'appareil mobile 610. Les fils conducteurs 632 sont ainsi connectés électriquement aux circuits de l'appareil mobile 610.

Le dispositif 600 comprend en outre, de préférence, un ou plusieurs aimants 430. Lorsque le dispositif 600 est en place contre l'appareil mobile, l'élément interagit avec un élément ferromagnétique 432 de l'appareil mobile, ce qui crée une force qui maintient le dispositif 600 en place contre l'appareil mobile 610.

La figure 7 représente, de manière très schématique, des circuits de communication et d'alimentation électrique compris dans le dispositif de communication et d'alimentation, et dans l'appareil mobile de la figure 6.

Le dispositif 600 comprend un circuit 300A du type du circuit 300 de la figure 3. L'appareil mobile 610 comprend un circuit 300B du type du circuit 300 de la figure 3.

Le fonctionnement des circuits 300A et 300B est similaire à celui des circuits 300A et 300B décrits en relation avec la figure 5. Des données 110A et 120A proviennent par exemple d'un dispositif du type du dispositif 450 décrit en relation avec la figure 4, relié, de préférence connecté, au câble 620. Les données 110A et 120A sont acheminées par le câble 630 et arrivent aux entrées 115 et 125 du circuit 300A. Les données 110A et 120A sont transmises, de la manière expliquée précédemment, aux sorties 115 et 125 du circuit 300B. Les données sont reçues par des circuits de l'appareil mobile 610, par exemple par un microprocesseur. De même, des données 110B et 120B provenant de l'appareil mobile parviennent aux sorties 115 et 125 du circuit 300A, et sont par exemple véhiculées par le câble 630 jusqu'au dispositif 450.

En parallèle de la transmission de données, du fait que les zones de contact 640 sont connectées aux fils 632 par les bornes à ressort 622, le dispositif 450 peut appliquer aux zones 640 une tension VBUS, par exemple référencée à la masse GNDA. La tension est appliquée en fonction des données de configuration d'alimentation électrique 120A et 120B échangées entre le dispositif 450 et l'appareil mobile 610. Cette tension peut être utilisée par des circuits de l'appareil mobile (non représentés) pour charger une réserve d'énergie. Les modes de réalisation décrits sont compatibles avec les réserves d'énergie usuelles d'appareil mobile et les circuits usuels de charge.

Comme pour le support 410 et l'appareil mobile 400 décrits en relation avec les figures 4 et 5, on obtient ainsi, sans connecteur de type USB, l'échange de données entre le dispositif 600 et l'appareil mobile 610 et, simultanément, la recharge de l'appareil mobile par une tension configurée en fonction des données de configuration électrique 120A et 120B.

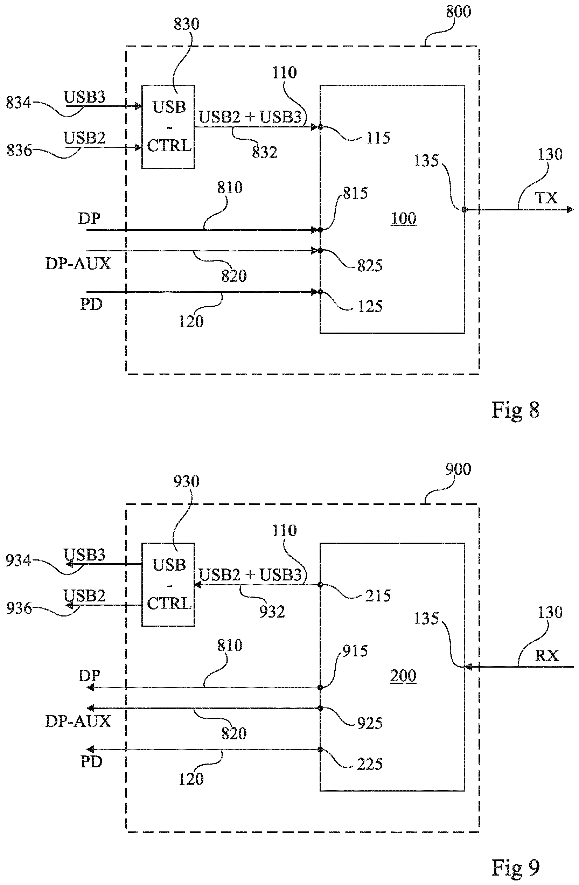

La figure 8 représente, de manière schématique, un mode de réalisation d'un circuit 800 de communication de données.

Le circuit 800 comprend un circuit 100 du type de celui de la figure 1. Ainsi, le circuit 100 est configuré pour recevoir des données 120 de configuration d'alimentation électrique et des données 110, et pour fournir des données 130 (TX) comprenant les données 110 et 120 en série.

Les données 110 comprennent des données de type USB 3.0 ou supérieur. Dans l'exemple représenté, les données 110 comprennent en outre des données série de type USB 2, c'est-à-dire des données dont le débit peut aller jusqu'à 480 Mb/s.

Le circuit 100 comprend en outre une entrée 815 de données vidéo 810. De préférence, les données vidéo 810 correspondent au standard connu sous le nom de "DisplayPort" (DP). Dans le cas de données vidéo répondant à ce standard, le circuit 100 comprend en outre, de préférence, une entrée 825 de données en série 820. Les données 820 correspondent à un canal auxiliaire (DP-AUX) de données transmises en parallèle du signal vidéo 810. Le canal auxiliaire permet de communiquer des informations liées aux informations vidéo, et optionnellement audio, véhiculées par les données vidéo 810. Les données vidéo 810 et auxiliaire 820 ne sont pas décrites en détail, les modes de réalisation étant compatibles avec les signaux vidéo et auxiliaire usuels, en particulier les signaux au standard "DisplayPort".

En fonctionnement, le circuit 100 reçoit les données 110, les données de configuration d'alimentation électrique 120, les données vidéo 810 et, optionnellement, les données 820. Les données 130 fournies par le circuit 100 comprennent les données 810 et 820, en série avec les données 110 et 120.

De préférence, le circuit 800 comprend en outre un circuit 830 (USB-CTRL) dont une sortie 832 est reliée à l'entrée 115 du circuit 100. Le circuit 830 a deux entrées 834 et 836 prévues pour recevoir respectivement des données de type USB 3.0 ou supérieur (USB 3), et de type USB 2. Le circuit 830 reçoit les données USB 2 et USB 3 et fournit sur la sortie 832 les données USB 2 et USB 3, par exemple en série (USB2 + USB3). Ainsi, le circuit 800 reçoit les données USB 2, USB 3, les données de configuration d'alimentation électrique 120, les données vidéo 810 et, optionnellement, les données 820. Les données 130 fournies par le circuit 800 comprennent, en série, les données USB 2, les données USB 3, les données de configuration d'alimentation électrique 120, les données vidéo 810 et les données 820.

La figure 9 représente, de manière schématique, un mode de réalisation d'un circuit 900 de communication de données.

Le circuit 900 comprend un circuit 200 du type de celui de la figure 2. Ainsi, le circuit 200 comprend une entrée de données 130 (RX). En fonctionnement, ces données sont par exemple reçues par une antenne d'un circuit de réception extérieur au circuit 900. Le circuit 200 fournit en parallèle, sur ses sorties 215 et 225, des données respectives 110 et 120. Les données 110 et 120 sont extraites des données 130. Les données 120 sont des données de configuration d'alimentation. Les données 110 sont de préférence du type des données 110 de la figure 8, c'est-à-dire comprenant des données en série de type USB 2, et de type USB 3.0 ou supérieur.

Le circuit 200 comprend en outre des sorties 915 et 925. En fonctionnement, le circuit 200 extrait des données 810 et 820 en plus des données 110 et 120, à partir des données en série 130. Les données 810 et 820 sont identiques ou similaires à celles décrites en relation avec la figure 8. En particulier, les données 810 sont des données vidéo, de préférence au standard "DisplayPort". Les données 820 correspondent au canal auxiliaire de données du standard "DisplayPort".

De préférence, la sortie 215 du circuit 200 est reliée à une entrée 932 d'un circuit 930 (USB-CTRL). Le circuit 930 reçoit les données 110 et fournit parallèlement, sur des sorties respectives 934 et 936, les données USB 2 et USB 3. Ainsi, le circuit 900 reçoit, en série, les données USB 2, les données USB 3, les données de configuration d'alimentation électrique 120, les données vidéo 810 et les données 820. Le circuit 900 fournit sur ses sorties respectives les données USB 2, USB 3, les données de configuration d'alimentation électrique 120, les données vidéo 810 et les données 820.

Le circuit 800 de la figure 8 peut remplacer le circuit 100 dans les modes de réalisation des figures 3 à 7. De même, le circuit 900 de la figure 9 peut remplacer le circuit 200 dans ces modes de réalisation.

En particulier, dans un mode de réalisation préféré, on remplace, dans chacun des circuits 300A et 300B du support 410 et de l'appareil mobile 400 des figures 4 et 5, les circuits 100 et 200 par respectivement les circuits 800 et 900. Les données USB 2, USB 3, 810 (DP), 820 (DP-AUX), 120 (PD) qui parviennent au circuit 800, et les données USB 3, USB 2, 810 (DP), 820 (DP-AUX), 120 (PD) qui proviennent du circuit 900, sont véhiculées par le câble 440. Comme ceci a été mentionné, le câble 440 véhicule en outre la tension d'alimentation VBUS référencée à la masse (GND). Le câble 440 est alors de préférence un câble correspondant au standard USB-C. Ainsi, le support 410 constitue un support d'appareil mobile permettant la communication avec l'appareil mobile et l'alimentation de l'appareil mobile, selon le standard USB-C, sans que l'appareil mobile soit équipé d'un connecteur de type USB-C. On évite ainsi les problèmes de fiabilité, évoqués ci-dessus, du connecteur USB-C, et on peut réduire l'épaisseur de l'appareil mobile.

De manière similaire, dans un autre mode de réalisation préféré, on remplace, dans chacun des circuits 300A et 300B du dispositif 600 et de l'appareil mobile 610 des figures 6 et 7, les circuits 100 et 200 par respectivement les circuits 800 et 900. Le câble 630 est alors de préférence un câble correspondant au standard USB-C. Ainsi, le dispositif 600 permet la communication avec l'appareil mobile et l'alimentation de l'appareil mobile selon le standard USB-C, sans que l'appareil mobile soit équipé de connecteur de type USB-C.

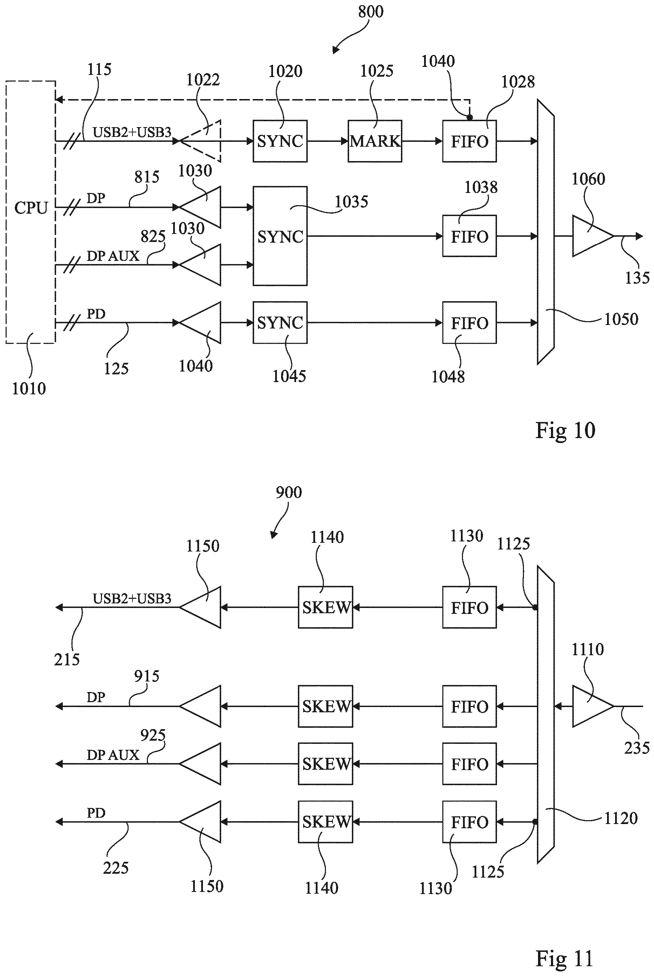

La figure 10 représente, schématiquement mais de manière plus détaillée, le circuit 800 de la figure 8, relié à une unité de traitement de données 1010 (CPU). L'unité de traitement de données 1010 peut être constituée par un microprocesseur 510 (figure 5) d'un appareil mobile, ou par un microprocesseur du dispositif 450 (figure 4).

Les entrées 115, 815, 825 et 125 du circuit 800 sont reliées à l'unité 1010. Le circuit 830 (figure 8), optionnel, n'est pas représenté ici. L'entrée 115 est reliée à l'entrée d'un circuit de synchronisation (SYNC) 1020. Dans le cas où les données 110 (USB2 + USB3) sont en série, la liaison entre l'entrée 115 et le circuit 1020 peut comprendre un désérialiseur 1022. En variante, les données USB 2 et USB 3 en sortie du circuit 1022 ne sont pas en série, et le désérialiseur 1022 peut être omis, l'entrée 115 étant alors de préférence connectée au circuit 1020. La sortie du circuit de synchronisation 1020 est reliée, de préférence connectée, à l'entrée d'un circuit 1025 (MARK). La sortie du circuit 1025 est reliée, de préférence connectée, à l'entrée d'une pile 1028 de type FIFO ("first in first out"). Les entrées 815 et 825 sont chacune reliée, de préférence connectée, à l'entrée d'un circuit désérialiseur 1030. Les sorties désérialisées des désérialiseurs 1030 sont chacune reliée, de préférence connectée, à une entrée d'un circuit de synchronisation 1035. La sortie du circuit de synchronisation 1035 est reliée, de préférence connectée, à l'entrée d'une pile FIFO 1038. L'entrée 125 est reliée, de préférence connectée, à l'entrée d'un circuit désérialiseur 1040. La sortie du circuit désérialiseur 1040 est reliée, de préférence connectée, à un circuit de synchronisation 1045. La sortie du circuit de synchronisation 1045 est reliée, de préférence connectée, à l'entrée d'une pile FIFO 1048. Les sorties des piles FIFO 1028, 1038 et 1048 sont reliées, de préférence connectées, à des entrées d'un multiplexeur 1050. La sortie du multiplexeur 1050 est reliée, de préférence connectée, à l'entrée d'un circuit sérialiseur 1060. La sortie 1060 du circuit sérialiseur 1060 constitue, ou est reliée à, la sortie 135 du circuit 100.

En fonctionnement, les données 110, 120, 810 et 820 (figure 8) entrant dans le circuit 800 sont synchronisées puis stockées dans les piles FIFO. Les données sont destockées des piles FIFO par le circuit multiplexeur 1050 dans un ordre prédéfini de mise en série des données. Les données extraites des piles FIFO sont mises en série par le circuit 1060 et fournies sur la sortie 135. Le circuit 1025 permet d'insérer, parmi les données 110, des marques définissant le début d'une trame de données en série. En variante, le circuit 1025 peut être situé entre le circuit 1035 et le circuit 1038.

De préférence, au moins l'une des piles FIFO 1028, 1038 et 1048, par exemple la pile 1028, comprend une sortie 1040 reliée à l'unité 1010. Lorsque le niveau de remplissage de la pile 1028 dépasse un seuil donné, un signal est émis sur la sortie 1040. L'unité 1010 interprète ce signal comme une demande de ralentir le débit de données entrant dans le circuit 800. Ceci permet d'ajuster le débit de données entrant dans le circuit 800 en fonction d'un débit maximum, par exemple un débit maximum d'émission par un circuit tel que le circuit 310 décrit en relation avec la figure 3.

La figure 11 représente, schématiquement mais de manière plus détaillée, le circuit 900 de la figure 9.

L'entrée 235 du circuit 900 est reliée, de préférence connectée, à l'entrée d'un circuit désérialiseur 1110. La sortie du désérialiseur 1110 est reliée, de préférence connectée, à l'entrée d'un circuit démultiplexeur 1120. Le démultiplexeur comprend quatre sorties 1125. Chacune des sorties 1125 est reliée, de préférence connectée, à l'une des sorties 125, 915, 925, et 225 du circuit 900, par l'intermédiaire successivement d'une pile FIFO 1130, d'un circuit aligneur de données (SKEW) 1140, et d'un circuit sérialiseur 1150.

En fonctionnement, le circuit démultiplexeur 1120 détecte l'ordre des données, par exemple en utilisant des marques telles que celles fournies par le circuit 1025 (figure 10). Le circuit 1125 distribue ensuite les données dans les piles FIFO 1130. Les données sont alors fournies, en série, sur les sorties 215, 915, 925 et 225. En variante, les données USB 2 et USB 3 ne sont pas en série, et sont par exemple fournies à un circuit du type du circuit 930 de la figure 9. Le circuit de la figure 9 fournit les données USB 3 et USB 2 sur deux sorties distinctes.

Divers modes de réalisation et variantes ont été décrits. L'homme de l'art comprendra que certaines caractéristiques de ces divers modes de réalisation et variantes pourraient être combinées, et d'autres variantes apparaîtront à l'homme de l'art.

Enfin, la mise en oeuvre pratique des modes de réalisation et variantes décrits est à la portée de l'homme du métier à partir des indications fonctionnelles données ci-dessus.

## Revendications

1. Procédé comprenant :
- la réception en parallèle, par un premier circuit de communication de données (100), de premières données de configuration d'alimentation électrique (120A) et de deuxièmes données (110A 810, 820), le premier circuit (100) faisant partie d'un dispositif (300) comprenant un deuxième circuit de communication de données (200), et un circuit (310) d'émission/réception sans fil ;
- la fourniture en série, par le premier circuit (100), des premières et deuxièmes données ; et
- l'émission sans fil, par le circuit (310) d'émission/réception sans fil, des premières et deuxièmes données en série ;
- la réception sans fil en série, par le circuit (310) d'émission/réception sans fil, de troisièmes données de configuration d'alimentation électrique (120B) et de quatrièmes données (110B, 810, 820) ; et
- la fourniture en parallèle, par le deuxième circuit (200), des troisièmes et quatrièmes données.

2. Procédé selon la revendication 1, dans lequel les deuxièmes et quatrièmes données (110, 110A, 110B) comprennent des données USB de type 3.0 ou supérieur.

3. Procédé selon la revendication 1 ou 2, dans lequel les deuxièmes et quatrièmes données (810, 820) comprennent des données vidéo.

4. Procédé selon l'une quelconque des revendications 1 à 3, dans lequel une fréquence d'émission des premières et deuxièmes données en série (130) est supérieure ou égale à 60 GHz et/ou une fréquence de réception des troisièmes et quatrièmes données en série (130) est supérieure ou égale à 60 GHz.

5. Circuit électronique (100, 200, 300, 800, 900) configuré pour mettre en oeuvre un procédé selon l'une quelconque des revendications 1 à 4.

6. Dispositif (410, 600) de communication sans fil avec un appareil mobile (400, 610), comprenant un circuit selon la revendication 5.

7. Dispositif (410, 600) selon la revendication 6, comprenant un premier câble (440, 630) de type USB-C adapté à véhiculer en parallèle les premières (120B) et deuxièmes (110B, 810, 820) données et/ou les troisièmes (120A) et quatrièmes données (110A).

8. Dispositif (410) selon la revendication 6 ou 7, comprenant une inductance (460A) d'alimentation électrique sans fil de l'appareil mobile.

9. Dispositif (600) selon l'une quelconque des revendications 6 à 8, comprenant des bornes (622) de contact à ressort.

10. Dispositif selon l'une quelconque des revendications 6 à 9, comprenant un ou plusieurs aimants (430).

11. Appareil mobile (400, 610), comprenant un circuit selon la revendication 5.

12. Appareil (410) selon la revendication 11, comprenant une inductance de réception d'alimentation électrique sans fil.

13. Appareil (600) selon la revendication 11 ou 12, comprenant des zones de contact d'alimentation électrique.

## Patentansprüche

1. Verfahren, das Folgendes aufweist:
- paralleles Empfangen, durch eine erste Datenkommunikationsschaltung (100), von ersten Stromversorgungskonfigurationsdaten (120A) und zweiten Daten (110A, 810, 820) wobei die erste Schaltung (100) Teil einer Vorrichtung (300) ist, die eine zweite Datenkommunikationsschaltung (200) und eine drahtlose Sende-/Empfangsschaltung (310) aufweist;
- Liefern von ersten und zweiten Daten in Reihe durch die erste Schaltung (100); und
- drahtloses Übertragen, durch die drahtlose Sende-/Empfangsschaltung (310), der ersten und zweiten Daten in Reihe;
- drahtloses Empfangen, durch die drahtlose Sende-/Empfangsschaltung (310), von dritten elektrischen Stromversorgungskonfigurationsdaten (120B) und vierten Daten (110B, 810, 820) in Reihe; und
- paralleles Liefern der dritten und vierten Daten durch die zweite Schaltung (200).

2. Verfahren gemäß Anspruch 1, wobei die zweiten und vierten Daten (110, 110A, 110B) USB-Daten des Typs 3.0 oder höher aufweisen.

3. Verfahren gemäß Anspruch 1 oder 2, wobei die zweiten und vierten Daten (810, 820) Videodaten aufweisen.

4. Verfahren gemäß einem der Ansprüche 1 bis 3, wobei eine Übertragungsfrequenz der ersten und zweiten Daten (130) in Reihe größer oder gleich 60 GHz ist und/oder eine Empfangsfrequenz der dritten und vierten Daten (130) in Reihe größer oder gleich 60 GHz ist.

5. Elektronische Schaltung (100, 200, 300, 800, 900), die konfiguriert ist zum Implementieren des Verfahrens gemäß einem der Ansprüche 1 bis 4.

6. Vorrichtung (410, 600) für die drahtlose Kommunikation mit einem mobilen Gerät (400, 610), das die Schaltung gemäß Anspruch 5 aufweist.

7. Vorrichtung (410, 600) gemäß Anspruch 6, aufweisend ein erstes USB-C-Kabel (440, 630), das ausgelegt ist zum parallelen Übertragen der ersten (120B) und zweiten (110B, 810, 820) Daten und/oder die dritten (120A) und vierten (110A) Daten.

8. Vorrichtung (410) gemäß Anspruch 6 oder 7, die eine Induktivität (460A) zur drahtlosen Stromversorgung der mobilen Vorrichtung aufweist.

9. Vorrichtung (600) gemäß einem der Ansprüche 6 bis 8, die Federkontaktanschlüsse (622) aufweist.

10. Vorrichtung gemäß einem der Ansprüche 6 bis 9, die einen oder mehrere Magneten (430) aufweist.

11. Mobiles Gerät (400, 610), das die Schaltung gemäß Anspruch 5 aufweist.

12. Gerät (410) gemäß Anspruch 11, das eine Induktivität zum Empfang einer drahtlosen Stromversorgung aufweist.

13. Gerät (600) gemäß Anspruch 11 oder 12, das Stromversorgungskontaktzonen aufweist.

## Claims

1. A method comprising :
- receiving in parallel, by a first data communication circuit (100), first electric power delivery configuration data (120A) and second data (110A, 810, 820), the first circuit (100) forming part of a device (300) comprising a second data communication circuit (200), and a wireless transmission/reception circuit (310);
- supplying in series, by the first circuit (100), the first and second data; and
- wirelessly transmitting, by the wireless transmission/reception circuit (310), the first and second data in series;
- wirelessly receiving, by the wireless transmission/reception circuit (310), third electric power delivery configuration data (120B) and fourth data (110B, 810, 820) in series; and
- supplying in parallel the third and fourth data by the second circuit (200).

2. The method according to claim 1, wherein the second and fourth data (110, 110A, 110B) comprise USB data of type 3.0 or higher.

3. The method according to claim 1 or 2, wherein the second and fourth data (810, 820) comprise video data.

4. The method according to any one of claims 1 to 3, wherein a transmission frequency of the first and second data (130) in series is greater than or equal to 60 GHz and/or a reception frequency of the third and fourth data (130) in series is greater than or equal to 60 GHz.

5. An electronic circuit (100, 200, 300, 800, 900) configured to implement the method according to any one of claims 1 to 4.

6. A device (410, 600) for wireless communication with a mobile device (400, 610), comprising the circuit according to claim 5.

7. The device (410, 600) according to claim 6, comprising a first USB-C type cable (440, 630) adapted to convey in parallel the first (120B) and second (110B, 810, 820) data and/or the third (120A) and fourth (110A) data.

8. The device (410) according to claim 6 or 7, comprising an inductance (460A) for wireless power supply of the mobile device.

9. The device (600) according to any of claims 6 to 8, comprising spring contact terminals (622).

10. The device according to any one of claims 6 to 9, comprising one or more magnets (430).

11. A mobile device (400, 610), comprising the circuit according to claim 5.

12. The device (410) according to claim 11, comprising a wireless power supply reception inductance.

13. The device (600) according to claim 11 or 12, comprising power supply contact zones.
